# EUROPEAN PATENT SPECIFICATION

(11) **EP 0 581 555 B1**
(45) Date of publication and mention of the grant of the patent: **01.10.1997**
(21) Application number: 93305878.6
(22) Date of filing: 26.07.1993
(51) Int. Cl.: G04G 15/00

(54) **Programmable switching unit**
Programmierbare Schalteinheit
Unité de commutation programmable

(30) Priority: 27.07.1992 US 919241
(43) Date of publication of application: 02.02.1994
(73) Proprietor: Simmons, Robert G., Etobicoke, Ontario M9C 1E6 (CA)
(72) Inventor: Simmons, Robert G., Etobicoke, Ontario M9C 1E6 (CA)
(74) Representative: Newby, John Ross

(56) References cited:
- DE-C- 3 710 850
- DE-U- 8 702 477
- FR-A- 2 618 233
- US-A- 4 695 739

## Description

This invention relates to an electrical switch for controlling lights or other appliances, of the type which can exercise control in a preprogrammed manner to turn controlled equipment on and off automatically in a manner simulating normal manual usage of a switch controlling the device.

Switches with such a capability are widely utilized, both for security purposes in order to turn lights on and off in a manner such as to provide an appearance that premises in which the switch is installed are occupied, or to turn lights or appliances on for preprogrammed periods each day.

Typically such switches incorporate a programmable timer of either electromechanical or electronic construction, and means for a user to set up manually a desired switching program. With the development of electronic technology, it has become economically viable to provide quite sophisticated programming capabilities in such devices, but in common with most programmable domestic appliances, programming requires a degree of mental application and assistance from instructions which results in the average user not fully exploiting the programming capabilities of the equipment, and rarely reprogramming it once an acceptable program has been achieved, either because of the effort involved, or because the programming instructions are no longer to hand.

Such switches may either take the form of a programmable switching device connected between an outlet and a light or appliance to be controlled, or may replace a conventional switch.

Examples of known programmable light switch controllers may be found in United States Patents Nos. 4,668,878 (Wyss), 4,570,216 (Chan), 4,354,120 (Schornack) and 4,349,748 (Goldstein et al.). The Chan, Goldstein and Schornack patents disclose the concept of an inherent programming mode in which operations of the switch in a 24 hour period following initialization of the switch are memorized and repeated indefinitely. The program can apparently only be altered by resetting the device, or by powering down, i.e. disconnecting and then reconnecting the switch from the circuit in which it is used, followed by complete reprogramming. In practice, this means, that the device cannot be reprogrammed in this mode without first destroying the existing program and then waiting for twenty-four hours. The Wyss patent apparently uses the events of the period before automatic operation is initiated, which period may or may not be typical. Such inherent programming has not hitherto been satisfactory in that it relies upon the switch operations in a specific period setting a suitable pattern for automatic operation. The Schornack patent also discloses that the stored pattern of switch operations be shifted bodily in time from day to day to randomise operation, but whilst this may change times of operation, it does not change the pattern of operation.

A primary object of the present invention is to provide a switch which can be readily programmed and reprogrammed to provide many of the functions of prior art switches without requiring any mental effort or reference to instructions by a user, which can be implemented with no external control devices apart from the switch activator itself, which can have the general appearance of a conventional switch or outlet adaptor without needing any dials or displays, and which is more likely to provide a realistic pattern of switch operations during automatic operation.

It has been found that, by combining accumulated data relating to times of ON and OFF transitions of the controlled device from a plurality of preceding periods (usually 24 hour periods), the likelihood of providing a schedule for automated operation which is representative of normal usage is greatly improved. Thus for example by maintaining tables of ON and OFF transitions for each of three twenty-four periods which are updated sequentially during normal operation of the switch, and combining the contents of these tables on a logical OR basis during automatic operation of the switch, representative usage during any one of the three days prior to entering automatic operation is likely to provide a satisfactory simulation of normal usage, particularly when the timings of the ON and OFF transitions are adjusted by small random amounts as previously discussed. If no switch events occur during a twenty four hour period, then the respective table is not updated, thus ensuring that a pattern of operation can be simulated even following a long period of non-use. Other modes of data accumulation are possible. For example a fixed number, for example eight, of both the most recent ON events and the most recent OFF events could be stored, in order to provide a schedule of events for use in the automatic mode over a twenty-four hour period.

Accordingly the invention provides a programmable switching unit for controlling electrically powered devices, as set forth in the appended claims.

In the drawings:
Figure 1 is a front view of a present embodiment of a programmable switch;
Figure 2 is a side elevation of the switch of Figure 2;
Figure 3 is a schematic diagram of the switch of Figure 1; and
Figure 4 is a schematic diagram of a second embodiment suitable for incorporation into a conventional multiadaptor unit.

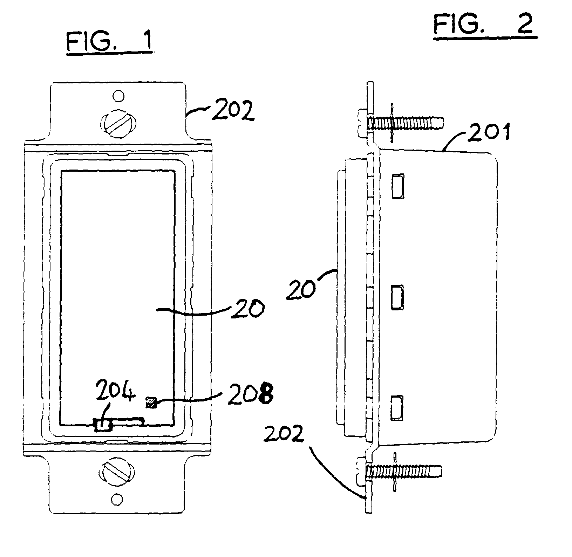

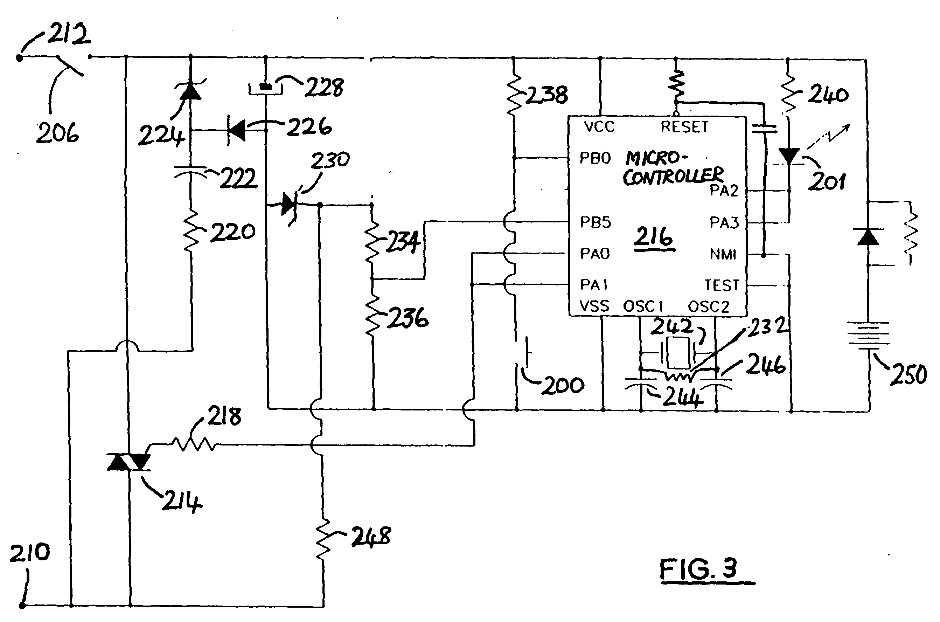

Referring to Figures 1-3, the electronic circuit of Figure 3 is contained within a housing 201 of a momentary contact switch 200 having a mounting plate 202 and a push plate 20, which acts to close the switch when pressed. An light emitting diode (LED) 208 is mounted in the push plate, and a tab 204 operates on air gap switch 206 (see Figure 3) enabling isolation of the controlled circuit independently of any solely electronic circuit, as required by some certification authorities.

The circuit itself is based upon the MC68HCO5J1 microcontroller from Motorola, although other suitable microcontrollers will be apparent to those skilled in the art, such as the ST6210 from SGS-Thompson which is specifically designed for use in power control applications and incorporates clamping diodes designed to provide a high degree of transient protection. The circuit is connected between line and load terminals 210 and 212 and may be isolated from the terminal 212 by the switch 206. The circuit includes a triac 214 connected directly between the switch and the terminal 210. When suitable signals are applied to the triac 214 from parallel connected output ports, lines PA0 and PA1 of the microcontroller 216, through a current limiting resistor 218, the triac is turned on a short period, 2ms in the example to be described, set by a program controlling the microcontroller, after the beginning of each half cycle of the supply; otherwise it remains turned off. The power supply circuit for the microcontroller is also connected across the triac 214, and includes a dropper resistor 220, a capacitor 222 and a zener diode 224 in series so as to produce voltage limited negative going pulse across the diode 224 during at least the short period of the beginning of each negative half-cycle of the supply, which is connected to direct current by a rectifier diode 226 and a reservoir capacitor or equivalent 228. One terminal 210 is also connected through a resistor 248 through a pair of resistors 234 and 236 in parallel with a zener diode 230, to the negative supply terminal VSS of the microcontroller 216, forming a potentiometer whose tap is connected to an input port line PB5 of the microcontroller. A further input port line PB0 is normally pulled up by a resistor 238, but may be pulled down by the momentary contact switch 200. Output port lines PA2 and PA3 can sink current through a resistor 240 and the LED 201. Non-maskable interrupt (NMI) and test terminals of the microcontroller are not used and are grounded, while a reset terminal is connected to a power-on delay circuit consisting of a resistor and a capacitor. A crystal 242 in conjunction with capacitors 244 and 246 and a resistor 232 connected to terminals OSC1 and OSC2 provide a clock signal for the microcontroller. In place of or additional to the reservoir capacitor 228, a rechargeable battery 250 may provide back-up power to the microcontroller 216 in the event of a power failure.

Operation of the microcontroller is controlled by a program, features of which will be readily apparent from the following pseudocode listing and memory map, which can readily be translated by those skilled in the art into assembly language appropriate to a selected micro-controller. It should be noted that the pseudocode assumes that interrupts are generated at 120 Hz, whereas the circuit of Figure 3 will produce interrupts at a 60 Hz rate in the case of a 60Hz supply, or 50 Hz from a 50 Hz supply. This will affect some of the timings quoted, but involves no difference in the principles of operation.

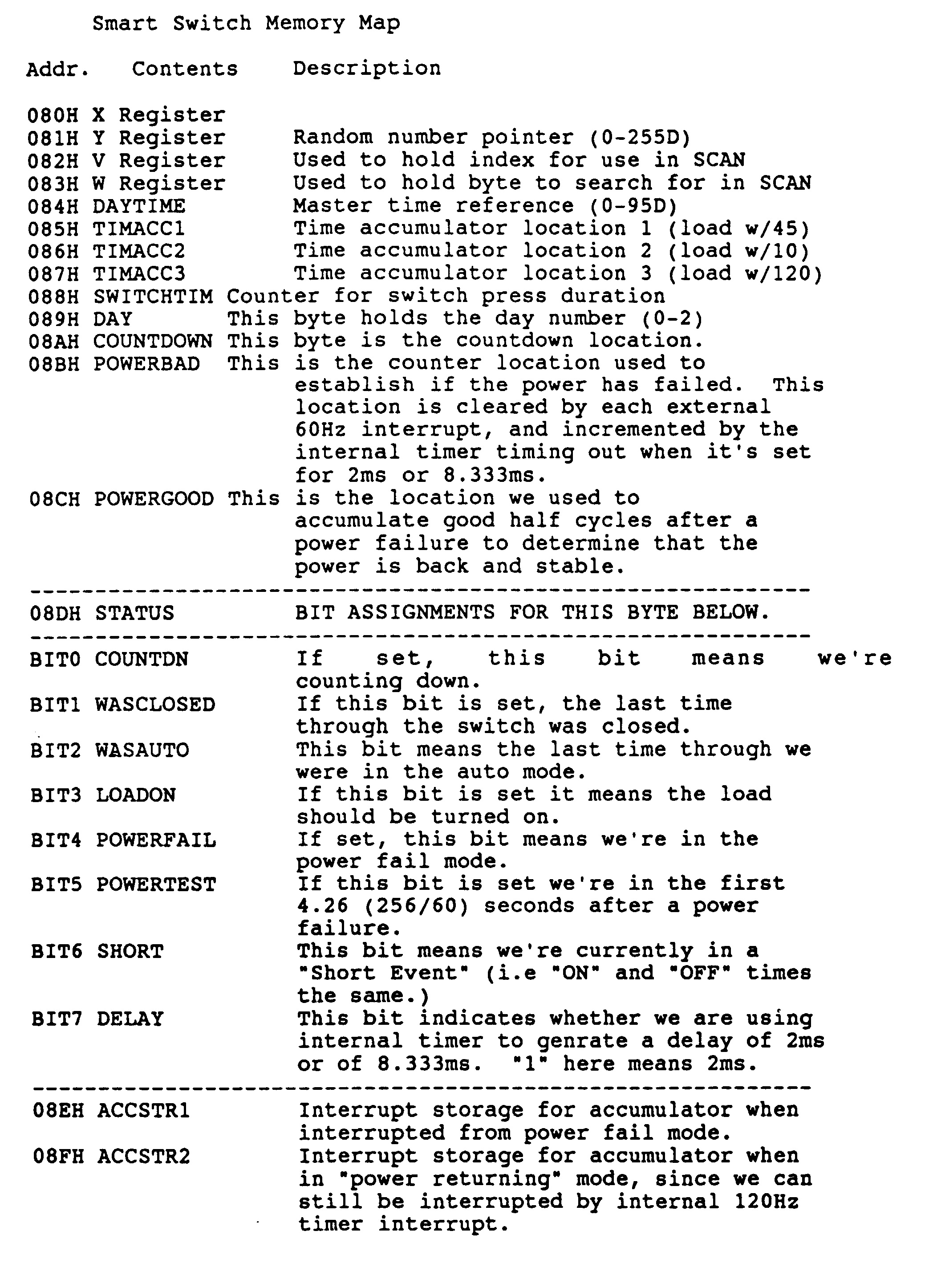

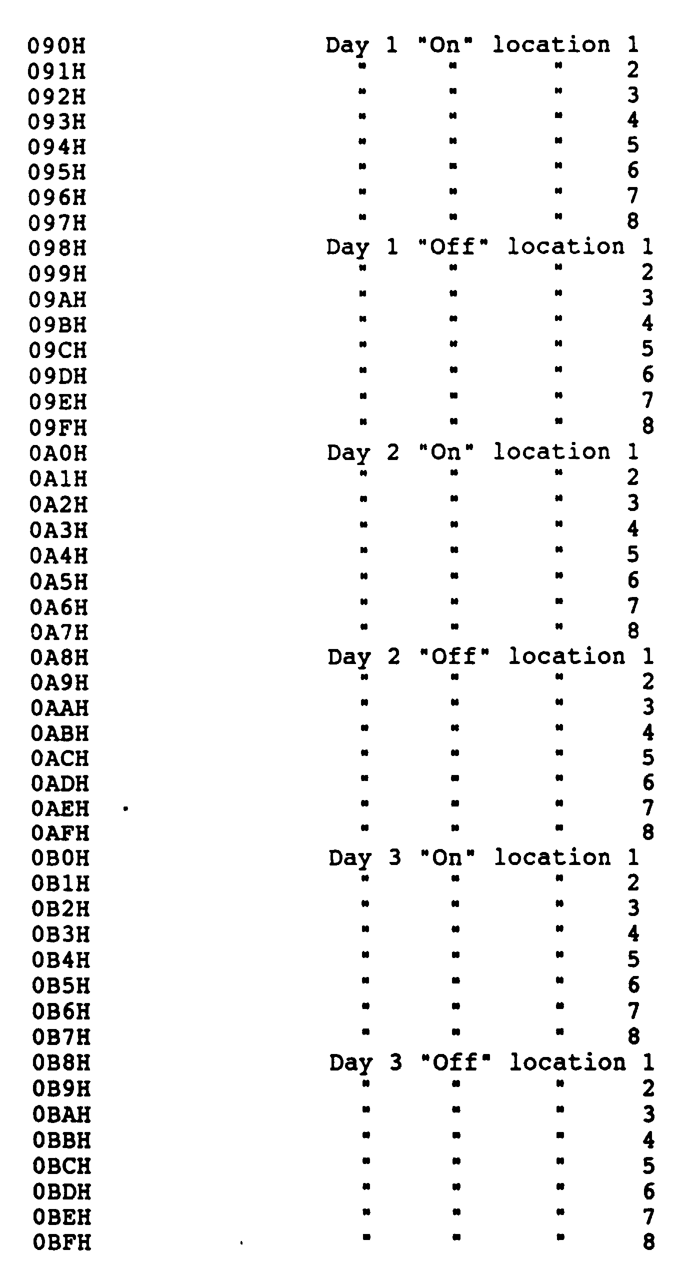

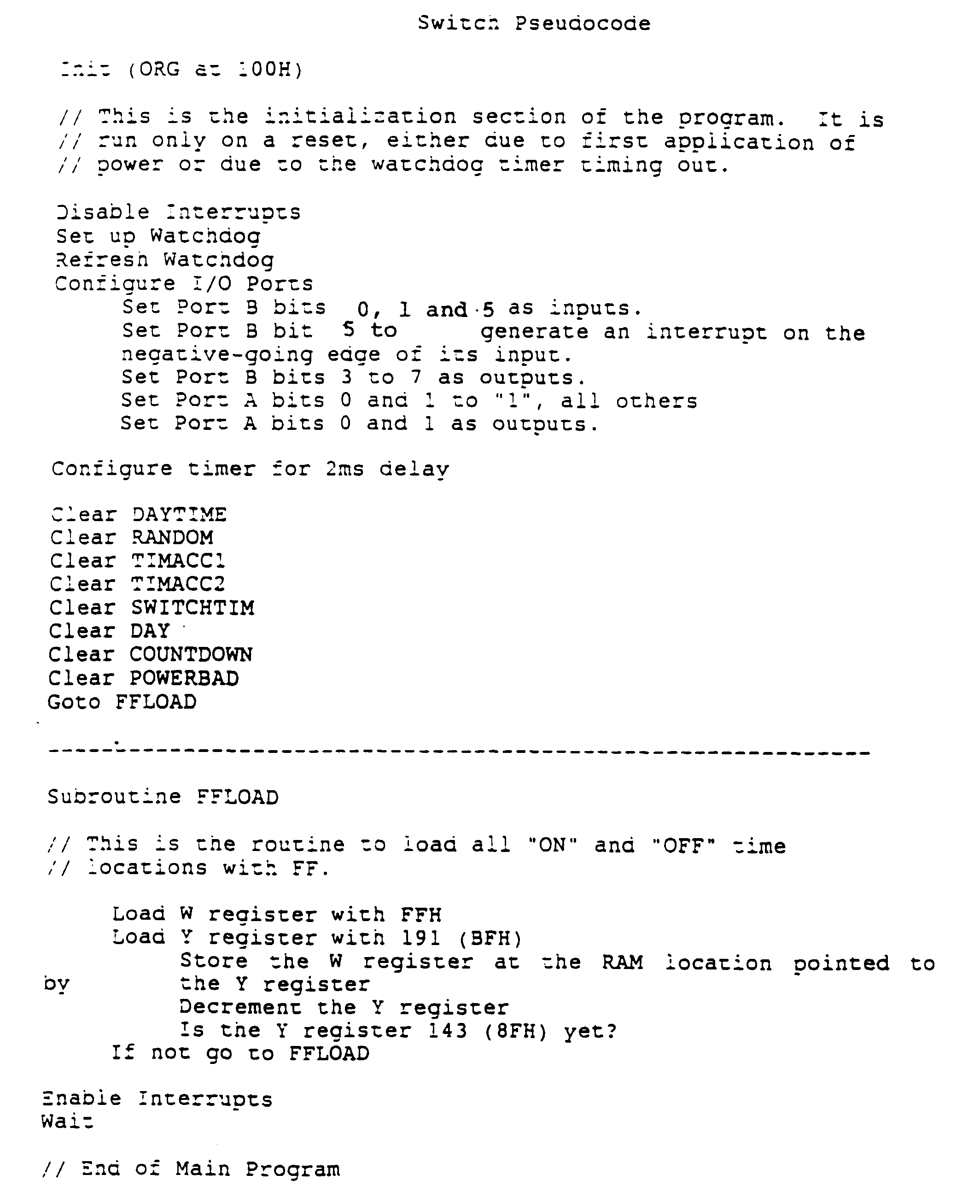

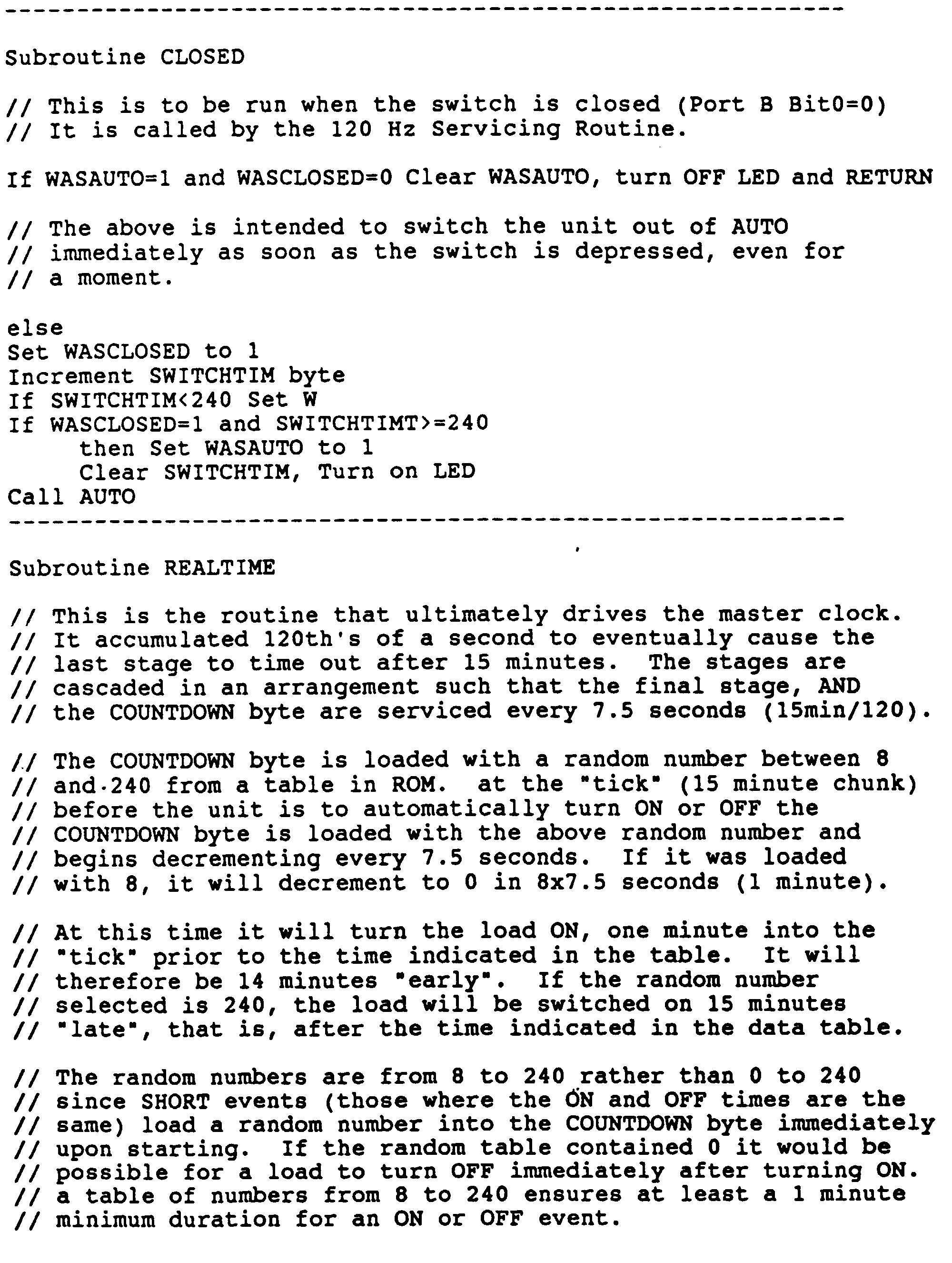

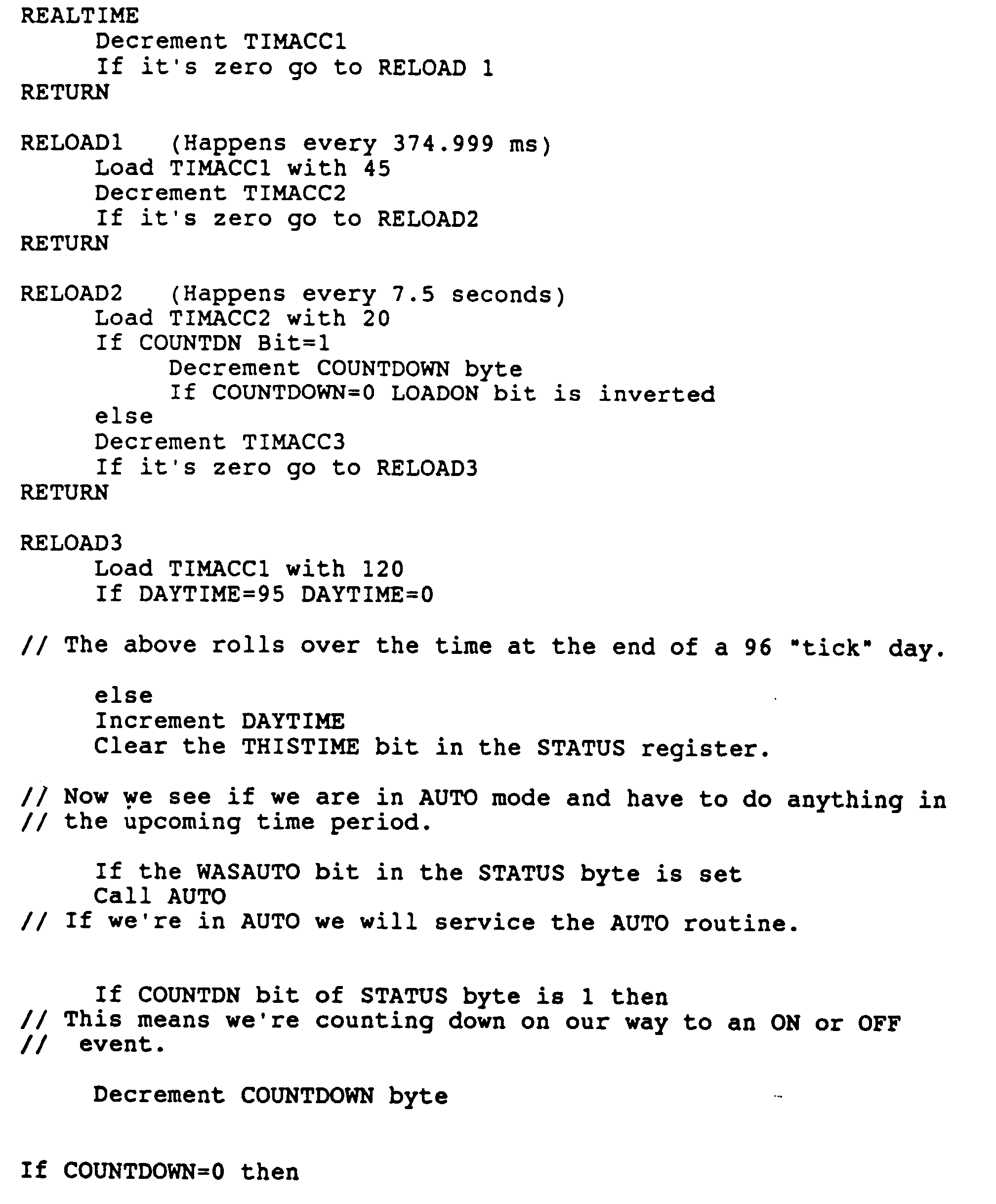

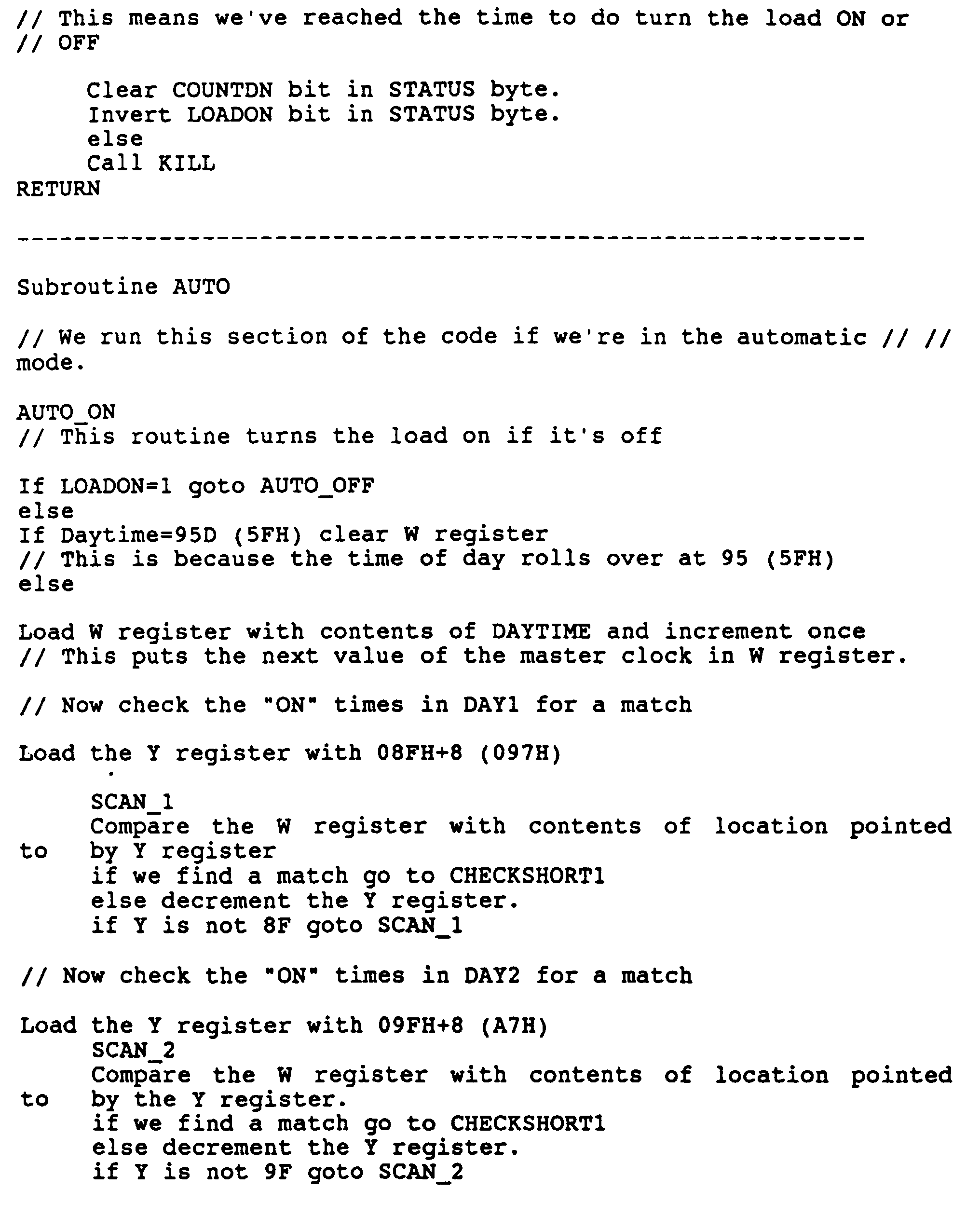

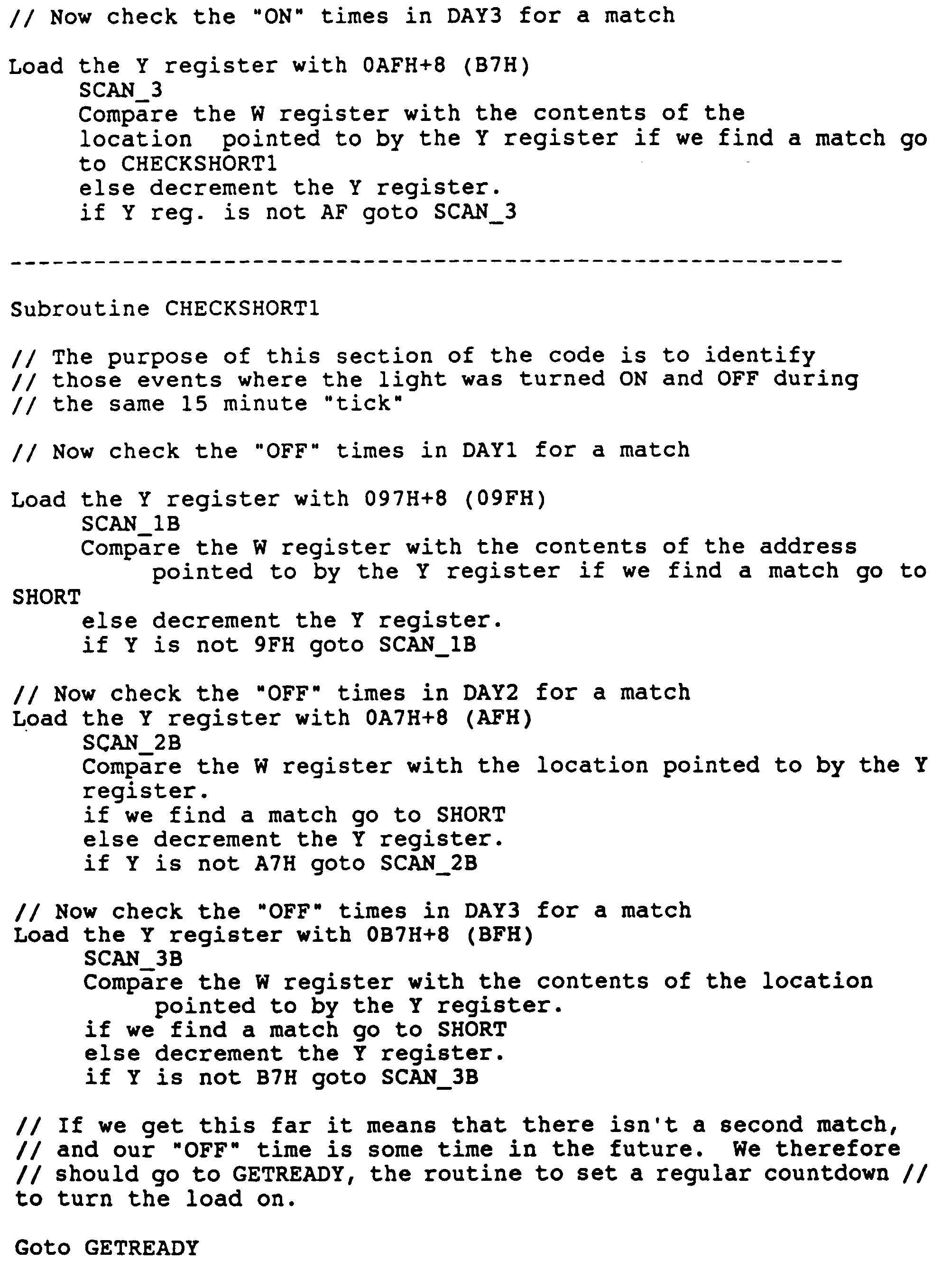

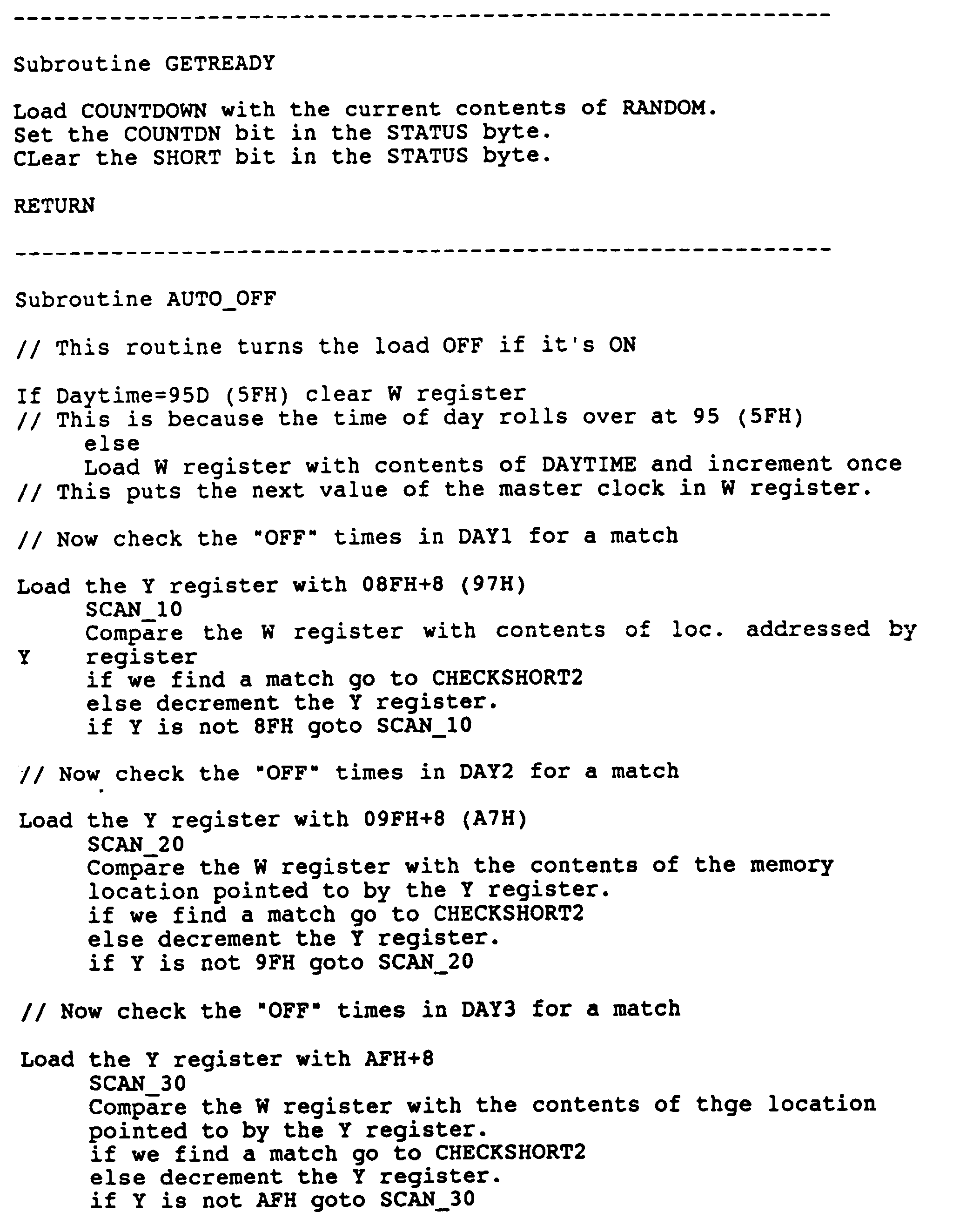

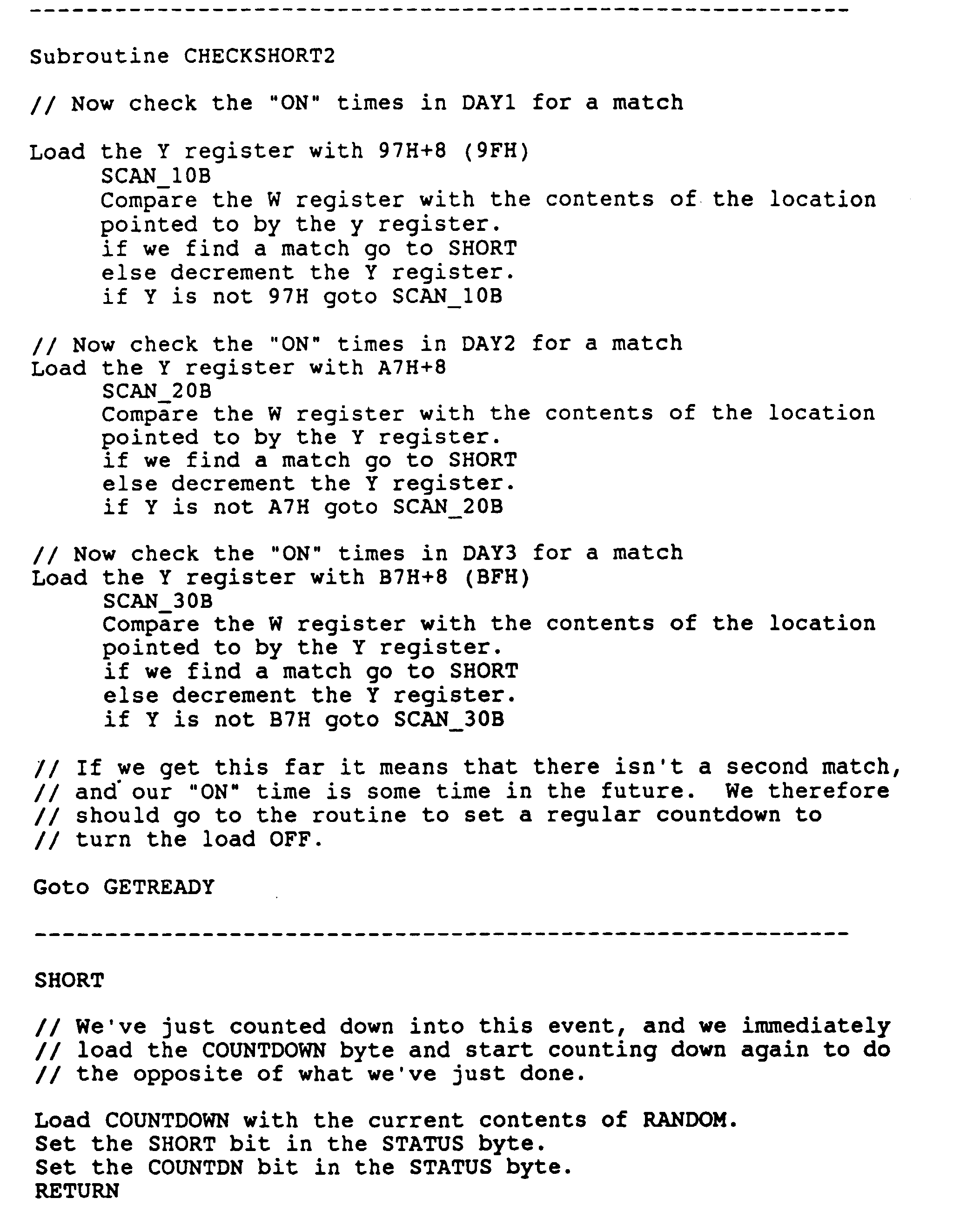

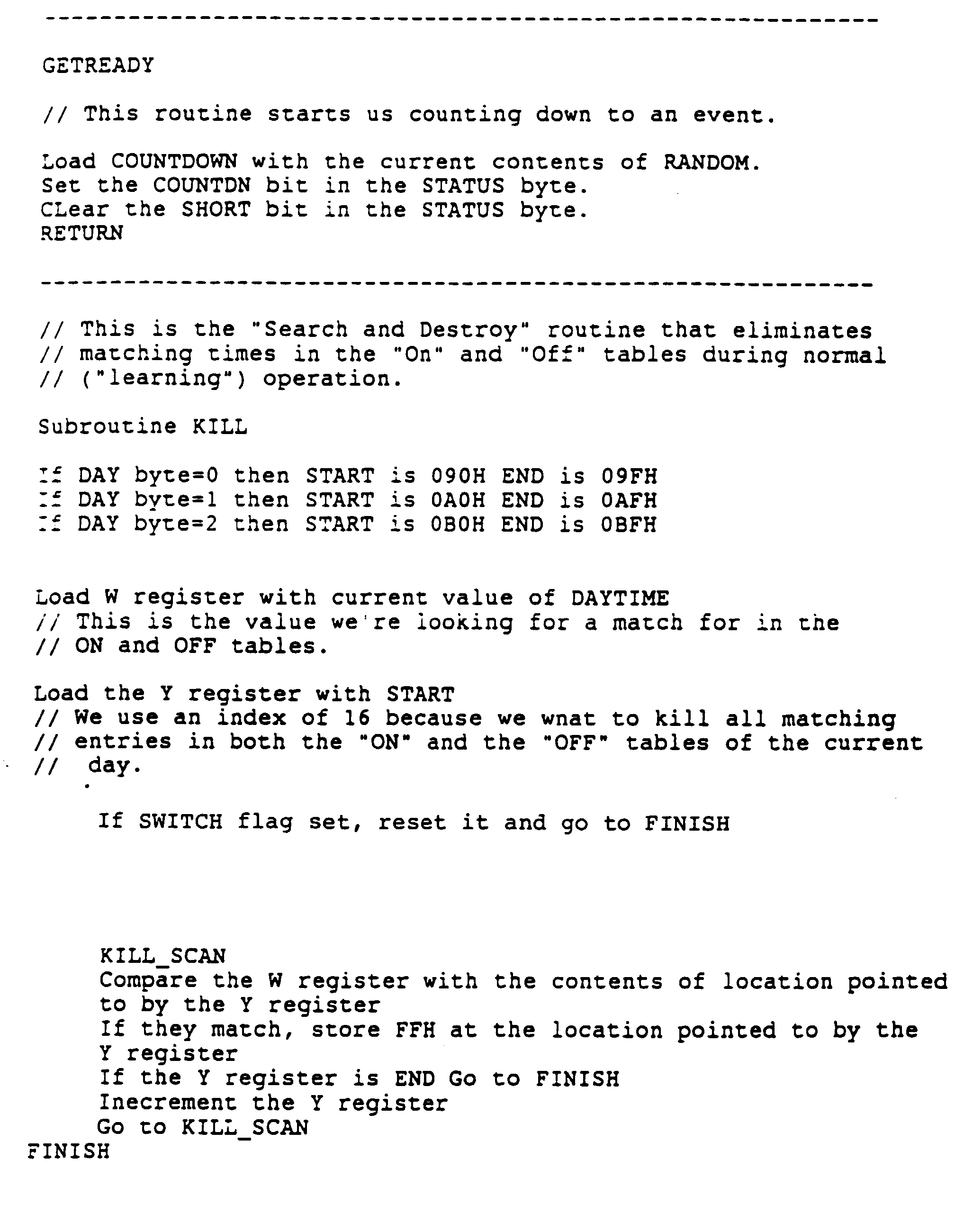

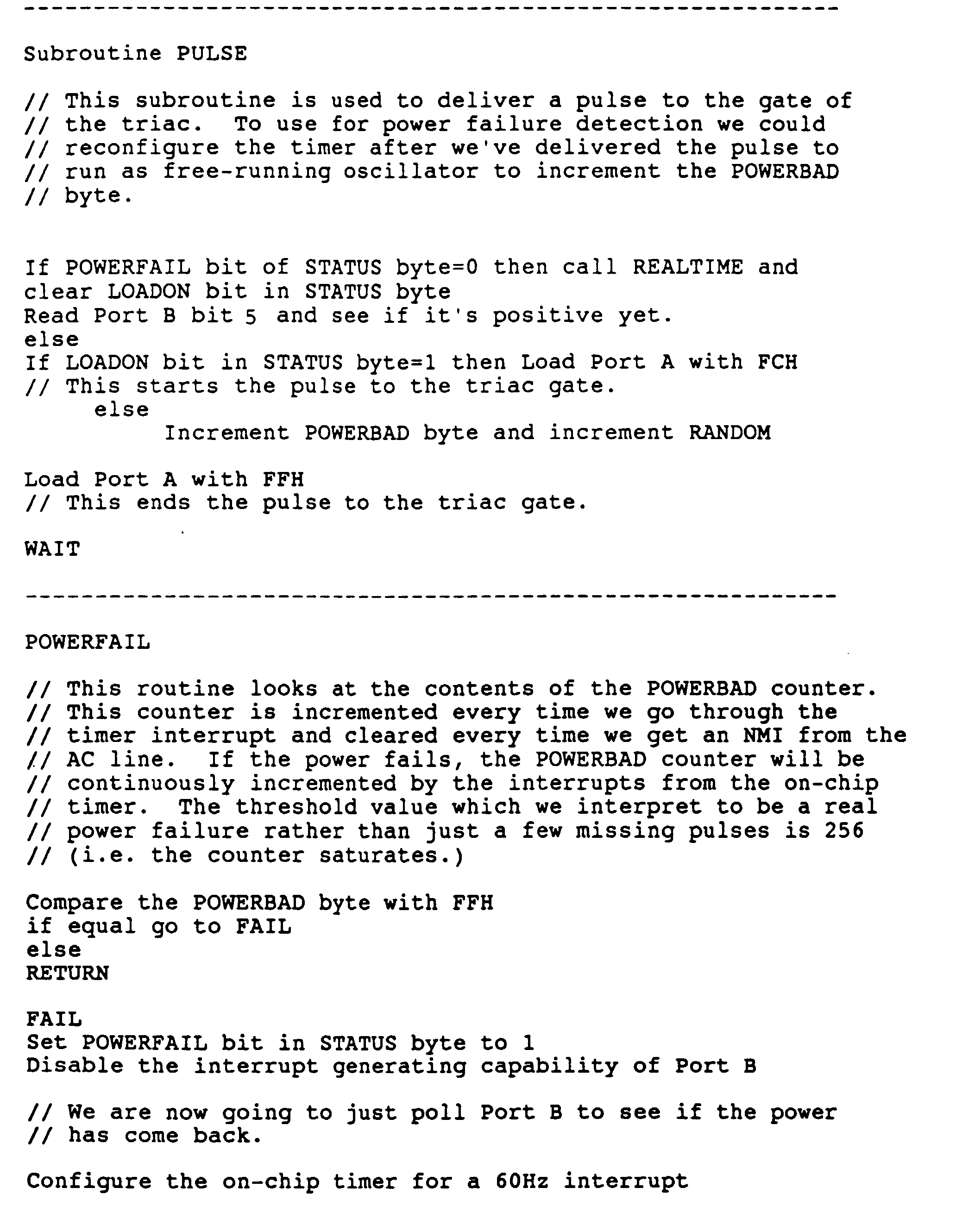

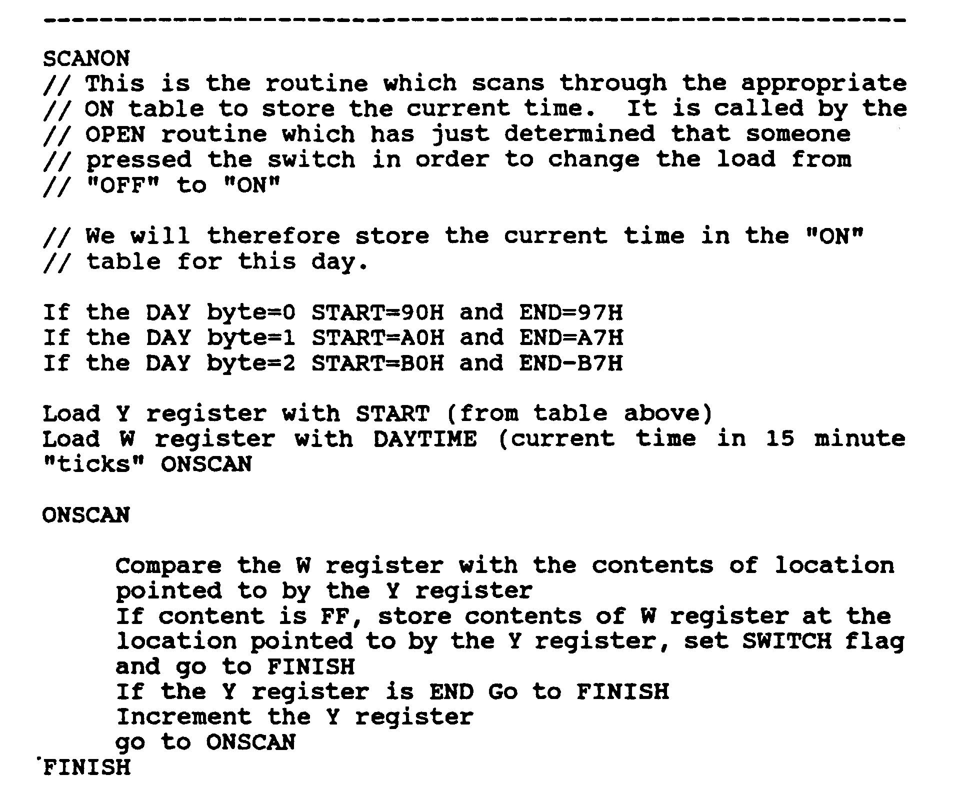

The SCANOFF routine is similar except that the START and END addresses are eight bytes higher. A routine is also preferably included which copies the contents of the memory locations to be used to provide the current day's ON and OFF storage locations to alternate locations at the beginning of the day, and restores these contents at the end of the day if none of the locations have been used to store new ON or OFF times, thus avoiding deprogramming of the device if the switch is unused for several days.

Both normal switching functions and mode switching are performed using a single momentary contact switch. As will be apparent from study of the preceding pseudocode, a brief press on the switch 200 (in this example less than two seconds) will merely cause the device as a whole to toggle between an ON condition in which the microcontroller forwards triggering pulses to the triac 214, thus allowing current to pass between the terminals 210 and 212 (except for brief periods at the start of each half cycle utilized to provide power to the microcontroller through the power supply circuit already described), and an OFF condition in which no pulses are forwarded and an open circuit times exists between the terminals 210 and 212 (except for a minimal current flow used to power the microcontroller). Any such activation of the switch will reverse the condition of the device, and will also take it out of the 'automatic' mode. In order to place the device in automatic mode, the switch is pressed for at least two seconds, and thereafter, until the switch is again pressed to toggle the state of the device, the microcontroller will change the condition of the device according to the data stored as to switch transitions in the tables for three successive twenty-four hour periods, the data in the tables relating to transitions of the type necessary to reverse the state of the switch being logically ORed to provide a composite switching pattern, and the timing of any transition applied being subjected to a random variance of up to 14 minutes ahead or 15 minutes beyond its nominal type (in this example). An additional advantage of this randomisation of switching times is that it disguises the fact that transitions are only recorded with a 15 minute resolution (in this example). In normal mode, the tables are written to on successive days, one at a time.

Various modifications in the program are possible within the scope of the invention. For example, a single table each of 'ON' and 'OFF' transitions could be maintained, with additions of transitions of each type beyond a predetermined total, for example eight, resulting in the oldest stored transition being discarded. Either system results in the stored pattern of switch transitions being updated on a continuous basis when the switch is in normal use, and in a composite pattern being regenerated during a cycle or automatic operation which is based upon a composite of several cycles (usually 24 hour periods) of normal operation. This is a major improvement over systems in which the automatic operation period is set up during an initialization of the switch, whether the programming of the actual switch transition times is manual or 'inherent'.

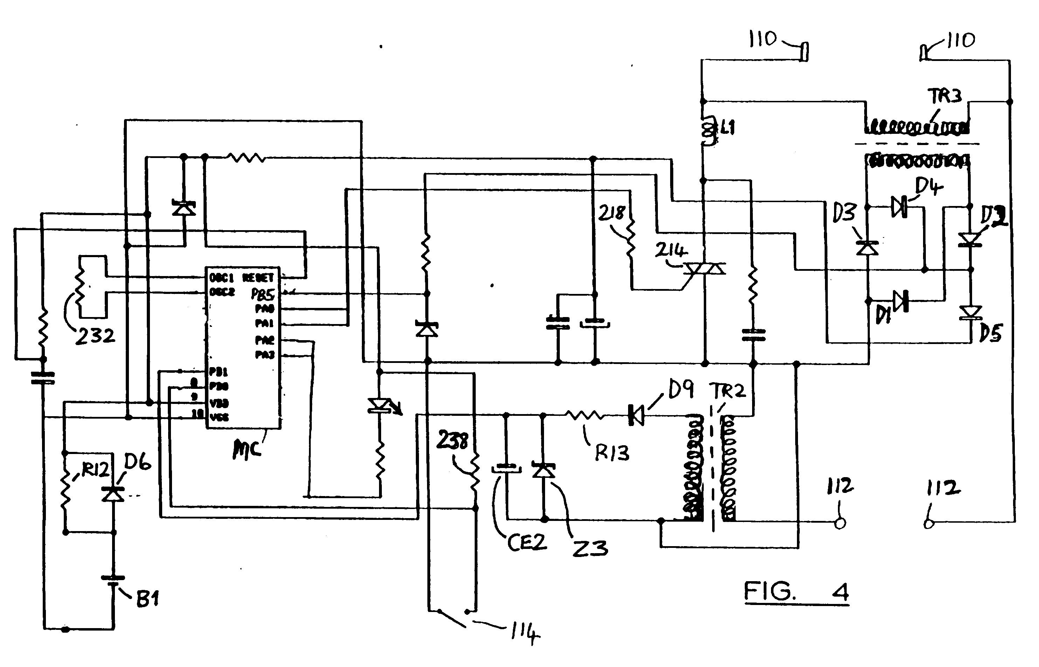

Figure 4 illustrates the circuit of an alternative embodiment for incorporation in a conventional single or multi-adaptor through which one or more appliances can be connected to an outlet. This resembles the previous embodiment in many respects, and only the differences will be described.

Externally, the unit will incorporate line and neutral pins 110 for insertion into an outlet, and line and neutral pin receptacles 112, duplicated as necessary, for the reception of the pins of appliance plugs. A ground pin and connected ground receptacle (not shown) may be provided but do not form part of the invention. The only external difference from a conventional adaptor is the provision of a single pole on/off switch 114, which in the ON position corresponds in function to a two second depression of the switch in the previous embodiment, i.e. it places the device in automatic mode.

This embodiment does not provide a facility for manual switching of a controlled light or appliance. Instead it senses, when the switch 114 is off, whether or not a controlled appliance is turned on by sensing the passage of current to the receptacles 112 by means of a current sensing transformer TR2, similar to those used for example in ground fault interrupter devices. The primary of the transformer is in series with the line receptacle(s) 112, whilst its secondary is connected via a diode D9 and a current limiting resistor R13 to a reservoir capacitor CE2. When current through the primary reaches a threshold level, the potential across capacitor CE2 will rise high enough to raise pin PB1 of the microcontroller to logical "1" level. Development of excessive potential across capacitor CE2 is prevented by Zener diode Z3.

The bridge rectifier formed by diodes D1 to D4 is supplied from a transformer TR3 across the line and neutral pins 110, thus reducing heat dissipation problems and permitting use of a simplified power supply circuit. A rechargeable battery B1 is provided. During normal operation, the battery trickle charges through R12, whilst under power failure or unplugged conditions, the battery powers the microcontroller MC through diode D6.

Generally similar software routines, mask programmed into the microcontroller, may be utilized as for the previous embodiments, since the data obtained from the push button switch in the first embodiment, and that derived from the current sensing transformer and the switch 114 in the second embodiment are essentially equivalent, although requiring somewhat different sensing routines as will be evident to those skilled in the art.

Rather than the momentary contact switch 200 of the first embodiment, a capacitative or non-contact, e.g. optical, switch could be utilized, within the scope of the invention.

## Claims

1. A programmable switching unit for controlling electrically powered devices, comprising:
a microcontroller (216) and memory associated therewith;
means (248, 234, 236) associated with the microcontroller for sensing ON and OFF conditions of a controlled device;
user operated control switch means (200);
means (238) associated with the microcontroller for sensing alternative conditions of the control switch means;
electrical switching means (214) in series with the controlled device and controlled by the microcontroller (216);
a timer implemented by the microcontroller (216) having a cycle period of predetermined duration; and
the microcontroller (216) including a control program having a first control program routine executed when the microcontroller senses a first condition set by said control switch means, and a second control program routine executed when it senses other conditions set by said control switch means, characterised in that said second control program routine causes the microcontroller to continuously update at least one table, formed in said memory, of time slots within a cycle period, within which ON and OFF transitions of said controlled device occur over a plurality of cycle periods, and said first control program routine causes the microcontroller to review said at least one table in advance of each time slot within a period for events which occured within that time slot in any of said plurality of cycle periods, determining according to the events detected and according to logic determined by said first control program routine whether a transition should occur during that time slot, and controlling said controlled switching device (214) during that time slot to apply at a time during the time slot any transition which the routine has determined should occur.

2. A switching unit according to claim 1, wherein the user operated control switch means (200) is a momentary contact switch, and the microcontroller (216) senses closures of that switch, a prolonged closure initiating said first control program routine and a short closure initiating said second program routine and toggling the condition of said electrical switching means (214).

3. A switching unit according to claim 1 or claim 2, wherein the second program routine configures the microcontroller (216) to maintain multiple tables relating to a plurality of sequential predetermined periods, and the first program routine logically ORs the contents of said multiple tables, to derive the times at which it controls said electrical switching means (214).

4. A switching unit according to any preceding claim, configured for mounting in a standard electrical wall switch box (201).

5. A switching unit according to any preceding claim, wherein the means for sensing ON and OFF conditions of a controlled device is a current sensing transformer (TR2) in series with the controlled device.

6. A switching unit according to any preceding claim, housed in an adaptor having pins (110) for insertion in a wall outlet and receptacles (112) for receiving a plug of a controlled device.

7. A switching unit according to any preceding claim, wherein said first program routine includes a subroutine to introduce substantially random variations in each of the times generated by the microcontroller (216).

8. A switching unit according to any preceding claim, wherein the cycle period is twenty-four hours.

9. A programmable switching unit for controlling electrically powered devices, comprising
a microcontroller (216);
means (248, 234, 236) associated with the microcontroller (216) for sensing ON and OFF transitions of a controlled device;
user operated control switch means (200);
means (238) associated with the microcontroller (216) for sensing alternative conditions of the control switch means (200);
electrical switching means (214) in series with the controlled device and controlled by the microcontroller (216);
memory associated with said microcontroller (216) and including an array formed therein for storing event data as to times of transistions of said electrical switching means between ON and OFF conditions;
a timer implemented by the microcontroller and having a cycle period of predetermined duration;
the microcontroller (216) having a first control program routine for controlling said electrical switching means (214) which it executes when said sensing means (238) senses a first condition set by said control switch means (200), characterised in that said first control program routine causes the microcontroller (216) to control said electrical switching means (214) within each of multiple time slots of a cycle period according to a switching program synthesized by logically combining event data relating to that time slot and stored in said array; and that
the microcontroller (216) has a second control program routine which senses and stores in said array event data sensed by said sensing means (208, 234, 236) relating to times of ON and OFF transitions of the controlled device within a cycle period, the array having the capacity to store event data from multiple cycle periods whereby said switching program is synthesized from data accumulated over multiple cycle periods.

10. A switching unit according to claim 9, wherein the array is configured to store separately data from each of an integral number of cycle periods, and the second routine ORs the separately stored data to synthesize the switching program.

11. A switching unit according to claim 9, wherein said first control program routine is configured first to review said at least one table for events representing transitions of said controlled device from its condition in a previous time slot, and if such a first transition is detected, to further review the table for an opposite transition, and if such an opposite transition is detected, the first control program routine is configured to control said controlled switching device during the time slot to apply at different successive times during the time slot both the first transition and the opposite transition.

## Patentansprüche

1. Programmierbare Schalteinheit zum Steuern von elektrisch gespeisten Vorrichtungen, umfassend:
eine Mikrosteuerung (216) und einen ihr zugeordneten Speicher;
der Steuerung zugeordnete Mittel (248, 234, 236) zum Messen von EIN- und AUS-Zuständen einer gesteuerten Vorrichtung;
ein von einem Benutzer betätigtes Steuerschaltmittel (200);
ein der Steuerung zugeordnetes Mittel (238) zum Messen von alternativen Zuständen des Steuerschaltmittels;
ein in Reihe mit der gesteuerten Vorrichtung geschaltetes und von der Mikrosteuerung (216) gesteuertes elektrisches Schaltmittel (214);
einen durch die Mikrosteuerung (216) realisierten Zeitgeber mit einer Taktdauer vorbestimmter Länge; und
wobei die Mikrosteuerung (216) ein Steuerprogramm mit einer ersten Steuerprogrammroutine, die ausgeführt wird, wenn die Mikrosteuerung einen von dem Steuerschaltmittel eingestellten ersten Zustand mißt, und einer zweiten Steuerprogrammroutine, die ausgeführt wird, wenn sie von dem Steuerschaltmittel eingestellte andere Zustände mißt, enthält, dadurch gekennzeichnet, daß die zweite Steuerprogrammroutine die Mikrosteuerung zur kontinuierlichen Aktualisierung mindestens einer in dem Speicher gebildeten Tabelle von Zeitkanälen innerhalb einer Taktperiode, innerhalb derer EIN- und AUS-Übergänge der gesteuerten Vorrichtung über mehrere Taktperioden auftreten, veranlaßt, und die erste Steuerprogrammroutine die Mikrosteuerung zur Überprüfung der mindestens einen Tabelle vor jedem Zeitkanal innerhalb eines Takts auf Ereignissehin, die innerhalb jenes Zeitkanals in einer beliebigen der mehreren Taktperioden aufgetreten sind, veranlaßt, wobei sie gemäß der erfaßten Ereignisse und gemäß der von der ersten Steuerprogrammroutine festgelegten Logik bestimmt, ob ein Übergang während jenes Zeitkanals erfolgen sollte, und die gesteuerte Schaltvorrichtung (214) während jenes Zeitkanals so steuert, daß zu einem Zeitpunkt während des Zeitkanals ein beliebiger Übergang angelegt wird, dessen Auftreten die Rontine festgelegt hat.

2. Schalteinheit nach Anspruch 1, bei der es sich bei dem von einem Benutzer betätigten Steuerschaltmittel (200) um einen Tastschalter handelt und die Mikrosteuerung (214) Schließungen dieses Schalters mißt, wobei eine längere Schließung die erste Steuerprogrammroutine einleitet und eine kurze Schließung die zweite Steuerprogrammroutine einleitet und den Zustand des elektrischen Schaltmittels (214) umschaltet.

3. Schalteinheit nach Anspruch 1 oder 2, bei der die zweite Programmroutine die Mikrosteuerung (216) so konfiguriert, daß sie Mehrfachtabellen unterhält, die mehrere nacheinander vorbestimmte Takte betreffen, und die erste Programmroutine die Inhalte der Mehrfachtabellen durch logisches ODER verknüpft, um die Zeitpunkte abzuleiten, zu denen sie das elektrische Schaltmittel (214) steuert.

4. Schalteinheit nach einem der vorhergehenden Ansprüche, die zur Befestigung in einem genormten elektrischen Wandschaltkasten (201) konfiguriert ist.

5. Schalteinheit nach einem der vorhergehenden Ansprüche, bei der es sich bei dem Mittel zum Messen von EIN- und AUS-Zuständen einer gesteuerten Vorrichtung um einen mit der gesteuerten Vorrichtung in Reihe geschalteten Strommeßtransformator (TR2) handelt.

6. Schalteinheit nach einem der vorhergehenden Ansprüche, die in einem Adapter mit Stiften (110) zum Einsetzen in eine Wandsteckdose und mit Aufnahmen (112) zum Aufnehmen eines Steckers einer gesteuerten Vorrichtung untergebracht ist.

7. Schalteinheit nach einem der vorhergehenden Ansprüche, bei der die erste Programmroutine eine Unterroutine enthält, um in jeden der von der Mikrosteuerung (216) erzeugten Zeitpunkte im wesentlichen willkürliche Veränderungen einzubringen.

8. Schalteinheit nach einem der vorhergehenden Ansprüche, bei der die Taktperiode vierundzwanzig Stunden beträgt.

9. Programmierbare Schalteinheit zum Steuern von elektrisch gespeisten Vorrichtungen, umfassend:
eine Mikrosteuerung (216);
der Mikrosteuerung (216) zugeordnete Mittel (248, 234, 236) zum Messen von EIN- und AUS-Übergängen einer gesteuerten Vorrichtung;
ein von einem Benutzer betätigtes Steuerschaltmittel (200);
ein der Mikrosteuerung (216) zugeordnetes Mittel (238) zum Messen von alternativen Zuständen des Steuerschaltmittels (200);
ein in Reihe mit der gesteuerten Vorrichtung geschaltetes und von der Mikrosteuerung (216) gesteuertes elektrisches Schaltmittel (214);
einen Speicher, der der Mikrosteuerung (216) zugeordnet ist und ein darin gebildetes Array zum Speichern von Ereignisdaten, die die Zeitpunkte der Übergänge des elektrischen Schaltmittels zwischen EIN- und AUS-Zuständen betreffen, enthält;
einen durch die Mikrosteuerung realisierten Zeitgeber mit einer Taktdauer vorbestimmter Länge;
wobei die Mikrosteuerung (216) eine erste Steuerprogrammroutine zum Steuern des elektrischen Schaltmittels (214) aufweist, die sie ausgeführt, wenn das Meßmittel (238) einen von dem Steuerschaltmittel (200) eingestellten ersten Zustand mißt, dadurch gekennzeichnet, daß die erste Steuerprogrammroutine die Mikrosteuerung (216) veranlaßt, das elektrische Schaltmittel (214) innerhalb jedes der mehrfachen Zeitkanäle einer Taktperiode gemäß einem durch logisches Verknüpfen von jenen Zeitkanal betreffenden und in dem Array gespeicherten Ereignisdaten synthetisierten Schaltprogramm zu steuern; und daß
die Mikrosteuerung (216) eine zweite Steuerprogrammroutine aufweist, die von den Meßmitteln (208, 234, 236) gemessene und Zeitpunkte von EIN- und AUS-Übergängen der gesteuerten Vorrichtung innerhalb einer Taktperiode betreffende Ereignisdaten mißt und in diesem Array speichert, wobei das Array die Kapazität aufweist, Ereignisdaten aus mehrfachen Taktperioden zu speichern, wodurch das Schaltprogramm aus über mehrfache Taktperioden angesammelten Daten synthetisiert wird.

10. Schalteinheit nach Anspruch 9, wobei das Array konfiguriert ist, Daten aus jeder von einer ganzzahligen Anzahl von Taktperioden getrennt zu speichern, und die zweite Routine die getrennt gespeicherten Daten logisch durch ODER verknüpft, um das Schaltprogramm zu synthetisieren.

11. Schalteinheit nach Anspruch 9, bei der die erste Steuerprogrammroutine konfiguriert ist, zuerst die mindestens eine Tabelle auf Ereignisse hin zu überprüfen, die Übergänge der gesteuerten Vorrichtung von ihrem Zustand in einem vorausgegangenen Zeitkanal darstellen, und falls ein derartiger erster Übergang erkannt wird, weiterhin die Tabelle auf einen entgegengesetzten Übergang hin zu überprüfen, und falls ein derartiger entgegengesetzter Übergang erkannt wird, die erste Steuerprogrammroutine konfiguriert wird, die gesteuerte Schaltvorrichtung während des Zeitkanals so zu steuern, daß sowohl der erste Übergang als auch der entgegengesetzte Übergang zu unterschiedlichen aufeinanderfolgenden, Zeitpunkten während des Zeitkanals angelegt werden.

## Revendications

1. Unité de commutation programmable pour commander des dispositifs électriques, comprenant:
un microrégisseur (216) et une mémoire associée à celui-ci;
des moyens (248, 234, 236) associés au microrégisseur pour détecter des conditions ON (Marche) et OFF (Arrêt) d'un dispositif commandé;
un moyen commutateur de commande (200) actionné par un utilisateur;
un moyen (238) associé au microrégisseur pour détecter des conditions alternatives du moyen commutateur de commande;
un moyen de commutation électrique (214) en série avec le dispositif commandé et commandé par le microrégisseur (216);
une minuterie mise en oeuvre par le microrégisseur (216) ayant une période de cycle d'une durée prédéterminée; et
le microrégisseur (216) comportant un programme de commande ayant un premier programme de commande exécuté lorsque le microrégisseur détecte une première condition fixée par ledit moyen commutateur de commande, et un deuxième programme de commande exécuté lorsqu'il détecte d'autres conditions fixées par ledit moyen commutateur de commande, caractérisée en ce que ledit deuxième programme de commande provoque la mise à jour continue, par le microrégisseur, d'au moins une table, formée dans ladite mémoire, de tranches de temps à l'intérieur d'une période de cycle, à l'intérieur desquelles des transitions ON et OFF dudit dispositif commandé se produisent sur une pluralité de périodes de cycle, et en ce que le premier programme de commande provoque le passage en revue par le microrégisseur de ladite au moins une table à l'avance de chaque tranche de temps, à l'intérieur d'une période, pour des évènements qui se sont produits à l'intérieur de cette tranche de temps dans l'une quelconque de ladite pluralité de périodes de cycle, en déterminant selon les évènements détectés et selon la logique déterminée par ledit premier programme de commande si une transition doit se produire au cours de cette tranche de temps, et en commandant ledit dispositif de commutation commandé (214) au cours de cette tranche de temps pour appliquer à une certain moment au cours de la tranche de temps toute transition devant se produire par détermination du programme.

2. Unité de commutation selon la revendication 1, dans laquelle le moyen commutateur de commande (200) actionné par un utilisateur est un commutateur à contact momentané, et le microrégisseur (216) détecte des fermetures de ce commutateur, une fermeture prolongée déclenchant ledit premier programme de commande et une fermeture courte déclenchant ledit deuxième programme et basculant la condition dudit moyen de commutation électrique (214).

3. Unité de commutation selon la revendication 1 ou la revendication 2, dans laquelle le deuxième programme configure le microrégisseur (216) pour maintenir des tables multiples relatives à une pluralité de périodes séquentielles prédéterminées, et le premier programme exécute l'opération OU de manière logique sur le contenu desdites tables multiples pour déduire les temps auxquels il commande ledit moyen de commutation électrique (214).

4. Unité de commutation selon l'une quelconque des revendications précédentes, configurée pour être montée dans un boîtier de commutateur mural électrique standard (201).

5. Unité de commutation selon l'une quelconque des revendications précédentes, dans laquelle les moyens pour détecter les conditions ON et OFF d'un dispositif commandé sont un transformateur de détection de courant (TR2) en série avec le dispositif commandé.

6. Unité de commutation selon l'une quelconque des revendications précédentes, logée dans un adaptateur ayant des broches (110) pour une insertion dans une prise murale et des prises femelles (112) pour recevoir une prise mâle d'un dispositif commandé.

7. Unité de commutation selon l'une quelconque des revendications précédentes, dans laquelle ledit premier programme comporte un sous-programme pour introduire des variations substantiellement aléatoires dans chacun des temps engendrés par le microrégisseur (216).

8. Unité de commutation selon l'une quelconque des revendications précédentes, dans laquelle la période de cycle est de vingt-quatre heures.

9. Unité de commutation programmable pour commander des dispositifs électriques, comprenant
un microrégisseur (216);
des moyens (248, 234, 236) associés au microrégisseur (216) pour détecter des transitions ON et OFF d'un dispositif commandé;
un moyen commutateur de commande (200) actionné par un utilisateur;
un moyen (238) associé au microrégisseur (216) pour détecter des conditions alternatives du moyen commutateur de commande (200);
un moyen de commutation électrique (214) en série avec le dispositif commandé et commandé par le microrégisseur (216);
une mémoire associée audit microrégisseur (216) et comportant un tableau formé dans celle-ci pour stocker des données d'évènements relatives aux temps de transitions dudit moyen de commutation électrique entre des conditions ON et OFF;
une minuterie mise en oeuvre par le microrégisseur et ayant une période de cycle d'une durée prédéterminée;
le microrégisseur (216) ayant un premier programme de commande pour commander ledit moyen de commutation électrique (214), qu'il exécute lorsque ledit moyen de détection (238) détecte une première condition fixée par ledit moyen commutateur de commande (200), caractérisée en ce que ledit premier programme de commande provoque la commande par le microrégisseur (216) dudit moyen de commutation électrique (214), à l'intérieur de chacune parmi des tranches de temps multiples d'une période de cycle, selon un programme de commutation synthétisé par combinaison logique de données d'évènements relatives à cette tranche de temps et stockées dans ledit tableau; et en ce que
le microrégisseur (216) a un deuxième programme de commande qui détecte et stocke dans ledit tableau des données d'évènements détectées par lesdits moyens de détection (248, 234, 236) relatives aux temps de transitions ON et OFF du dispositif commandé à l'intérieur d'une période de cycle, le tableau ayant la capacité de stocker des données d'évènements provenant de périodes de cycle multiples, ce par quoi ledit programme de commutation est synthétisé à partir de données accumulées sur des périodes de cycle multiples.

10. Unité de commutation selon la revendication 9, dans laquelle le tableau est configuré pour stocker séparément des données provenant de chacune d'un nombre entier de périodes de cycle, et le deuxième programme exécute l'opération OU pour stocker séparément des données pour synthétiser le programme de commutation.

11. Unité de commutation selon la revendication 9, dans laquelle ledit premier programme de commande est configuré pour, tout d'abord, passer en revue ladite au moins une table pour des évènements représentant des transitions dudit dispositif commandé depuis sa condition dans une tranche de temps antérieure, et si une telle première transition est détectée, pour passer davantage en revue la table pour une transition opposée, et si une telle transition opposée est détectée, le premier programme de commande est configuré pour commander ledit dispositif de commutation commandé au cours de la tranche de temps pour appliquer, à des temps successifs différents au cours de la tranche de temps, à la fois la première transition et la transition opposée.
